# DEMANDE DE BREVET EUROPEEN

(11) **EP 2 525 377 A1**
(43) Date de publication de la demande: **21.11.2012**
(21) Numéro de dépôt: 11166818.2
(22) Date de dépôt: 19.05.2011
(51) Int. Cl.: H01G 9/155, H01G 9/016

(54) **Collecteur de courant et procédé de sa fabrication**

(71) Demandeur: Yunasko Limited, London W1B 3HH (GB)
(72) Inventeur: Podmogilnyi, Sergii, 04108 Kiev (UA); Maletin, Yuriy, 03115 Kiev (UA); Zelinskyi, Iurii, 03150 Kiev (UA)
(74) Mandataire: Delamare, Raoul

(57) **Abrégé**

L'invention concerne un procédé d'un collecteur de courant (2) pour un supercondensateur (3) comprenant une phase de traitement d'une surface de la feuille d'aluminium (20) consistant à :
- installer la feuille d'aluminium (20) dans une chambre à vide (4),
- déposer sur la surface de la feuille d'aluminium (20) un revêtement conducteur (21).

Selon l'invention, la phase de traitement comprend une étape d'élimination d'une pellicule native d'oxyde de la surface de la feuille d'aluminium (20). Dans ces conditions la feuille d'aluminium (20) est revêtue intégralement par le revêtement conducteur ininterrompu (21) qui comprend une couche externe (210) consistant en carbone.

L'invention concerne également un collecteur de courant (2) réalisé à l'aide du procédé de fabrication (1) selon l'invention.

## Description

La présente invention concerne, de manière générale, le domaine d'électrotechnique et, en particulier, un collecteur de courant en feuille d'aluminium et un procédé de sa fabrication. Un tel collecteur est utilisé en production des électrodes pour un condensateur à double couche électrique, habituellement appelé supercondensateur ou ultracondensateur, dont la capacité électrique unitaire peut atteindre 10⁷ Farad/m³. Grâce à cette capacité électrique si élevée, et à une énergie unitaire qui lui est proportionnelle, les supercondensateurs sont essentiellement utilisés comme des sources d'énergie impulsionnelles qui sont soit indépendantes (lorsqu'une impulsion unitaire d'énergie suffit), soit en combinaison avec des accumulateurs traditionnels pour aplanir des pointes de charge sur la batterie d'accumulateurs.

Plus précisément, l'invention concerne, selon un premier de ses aspects, un procédé de fabrication d'un collecteur de courant en feuille d'aluminium destiné à un condensateur à double couche électrique. Ce procédé de fabrication comprend une phase de traitement d'au moins une partie préalablement sélectionnée de surface de la feuille d'aluminium. Cette phase de traitement comprend des étapes suivantes consistant à :
- installer la feuille d'aluminium dans une chambre à vide,
- déposer sur la partie sélectionnée de surface de la feuille d'aluminium par une technique de pulvérisation sous vide un revêtement conducteur.

Un tel procédé de fabrication d'un collecteur de courant en feuille d'aluminium pour un supercondensateur est connu de la demande de brevet internationale WO 00/19465. D'après ce document, une couche conductrice pulvérisée sous vide sur la surface du collecteur de courant est constituée en nitrures, en carbures ou en borures d'une famille des métaux. Ces composés adhérent solidement à une pellicule native d'oxyde présente sur la surface de la feuille d'aluminium et possèdent d'une conductibilité électrique élevée. Une telle solution permet de minimiser la résistance de contact entre un matériau d'électrode et le collecteur de courant métallique. Cela contribue à réduire la résistance interne du supercondensateur selon WO 00/19465 et, par conséquent, à augmenter la puissance unitaire de ses impulsions à destination de la charge utile. Cependant la couche conductrice métallique selon WO 00/19465 se corrode dans un électrolyte qui remplit le supercondensateur. La corrosion de la couche conductrice métallique est particulièrement rapide sur une électrode qui se présente comme une anode du supercondensateur. Il en résulte une dissolution quasi complète de la couche conductrice métallique ce qui est insatisfaisant.

La présente invention qui s'appuie sur cette observation originale, a principalement pour but de proposer un procédé de fabrication d'un collecteur de courant visant au moins à réduire l'une au moins des limitations précédemment évoquées. A cette fin, le procédé de fabrication, par ailleurs conforme à la définition générique qu'en donne le préambule ci-dessus, est essentiellement caractérisé en ce que la phase de traitement comprend une étape consistant à éliminer une pellicule native d'oxyde de la partie sélectionnée de surface de la feuille d'aluminium, en ce que la partie sélectionnée de surface de la feuille d'aluminium est revêtue intégralement par le revêtement conducteur ininterrompu, et en ce que le revêtement conducteur comprend au moins une couche externe consistant exclusivement en carbone.

Grâce à ce procédé de fabrication la pellicule native d'oxyde se substitue sur la surface de la feuille d'aluminium par le revêtement conducteur ininterrompu (c'est-à-dire, sans ruptures) en carbone qui est résistant chimiquement et électrochimiquement à l'attaque des oxydants (en particulier, de l'électrolyte liquide du supercondensateur ou de l'oxygène de l'air). La barrière continue ainsi obtenue bloque l'accès de l'oxydant au collecteur de courant de la feuille d'aluminium ce qui empêche la corrosion du collecteur de courant, y compris sur l'électrode qui est l'anode du supercondensateur. Cela permet d'augmenter la durée d'exploitation du supercondensateur. En outre, le collecteur de courant fabriqué selon l'invention ne corrode pas à l'air libre ce que facilite son stockage, son acheminement et, plus encore, rend possible l'assemblage de l'électrode dans un milieu (par exemple, d'air) comprenant l'oxydant en phase gazeuse (ou liquide). Enfin, la présence du revêtement conducteur ininterrompu en carbone permet de maintenir la résistance entre le matériau d'électrode et le collecteur de courant métallique aussi proche du zéro que celle du supercondensateur connu selon WO 00/19465. Cependant, comparée à la technologie selon WO 00/19465, la fiabilité du procédé de fabrication selon l'invention est meilleure car il n'exige pas l'obtention, complexe au plan technologique, des composés stoechiométriques prédéterminés de nitrures, de carbures ou de borures des métaux lors de leur pulvérisation sous vide, étant entendu que tout écart de la stoechiométrie prédéterminée conduit à l'augmentation substantielle de la résistance de contact du collecteur de courant selon WO 00/19465.

De préférence, le revêtement conducteur comprend au moins une couche interne disposée entre la couche externe et la feuille d'aluminium. Dans ces conditions, la couche interne consiste en mélange de carbone et d'aluminium.

La présence de la couche interne intermédiaire en mélange de carbone et d'aluminium améliore une adhésion de la couche externe (en carbone) vers la feuille d'aluminium ce qui, à son tour, contribue à la réduction supplémentaire de la résistance de contact du collecteur de courant fabriqué selon le procédé inventé.

De préférence, l'étape d'élimination de la pellicule native d'oxyde est réalisée dans une atmosphère d'un gaz inerte à l'aide d'un canon à ions ou d'un générateur de plasma haute fréquence.

L'utilisation du canon à ions ou du générateur de plasma haute fréquence permet :
- d'éliminer la pellicule native d'oxyde et des pollutions éventuelles de la surface de la feuille d'aluminium, et
- d'augmenter une rugosité primaire de cette surface.

Cela contribue à améliorer l'adhésion du revêtement conducteur ininterrompu lors de sa pulvérisation sur la surface de la feuille d'aluminium.

De préférence, l'étape de dépôt du revêtement conducteur ininterrompu est réalisée à l'aide de l'une au moins des techniques suivantes: (a) technique magnétron; (b) technique cathodique; (c) technique à arc électrique; (d) technique de plasma ionique.

Grâce à cette caractéristique il est possible de former le revêtement conducteur ininterrompu avec une vitesse de traitement de la partie sélectionnée de surface de la feuille d'aluminium atteignant 0,3 m²/s. De ce fait, le procédé de fabrication selon l'invention assure un rendement élevé.

De préférence, avant la phase de traitement, le procédé de fabrication selon l'invention comprend une étape consistant à ajouter une rugosité supplémentaire à la partie sélectionnée de surface de la feuille d'aluminium à l'aide des techniques mécaniques ou chimiques

La présence de la rugosité supplémentaire (de plus à la rugosité primaire mentionnée ci-dessus) de la surface de feuille d'aluminium permet d'améliorer davantage l'adhésion du revêtement conducteur ininterrompu pulvérisé sur elle par la suite.

De préférence, la feuille d'aluminium présente une face recto et, à l'opposé d'elle, une face verso. Dans ces conditions, la partie sélectionnée de surface occupe jusqu'à 99% de, au moins, la face recto de la feuille d'aluminium.

Cela permet de faciliter des manipulations avec la feuille d'aluminium dans la chambre à vide lors de la phase de traitement et, en conséquence, d'accélérer la fabrication du collecteur de courant.

Selon un deuxième de ses aspects, l'invention concerne un collecteur de courant en feuille d'aluminium réalisé à l'aide du procédé de fabrication mentionné ci-dessus et destiné à un condensateur à double couche électrique. Dans ces conditions, une première épaisseur de la feuille d'aluminium fait au moins 1,5*10⁻⁵ m, et une deuxième épaisseur du revêtement conducteur ininterrompu est comprise dans l'un des intervalles suivants : (a) de 10⁻⁸ m à 5*10⁻⁶ m; (b) de 5*10⁻⁸ M à 5*10⁻⁷ m.

Des faibles valeurs de la première et de la deuxième épaisseur permettent d'économiser de l'aluminium et du carbone ce qui est particulièrement important pour une production en série des collecteurs de courant. En outre, cela assure un faible poids et volume du collecteur de courant ce qui est particulièrement important, par exemple, lors de son utilisation dans des véhicules, des appareils volants et des appareils ménagers. Enfin, ces caractéristiques permettent d'obtenir un tel rapport des première et deuxième épaisseurs l'une par rapport à l'autre (notamment, lorsque la deuxième épaisseur du revêtement conducteur ininterrompu est comprise dans un intervalle de 5*10⁻⁸ m à 5*10⁻⁷ m) que le collecteur de courant a une forme quasibidimensionnelle (en forme d'une feuille) dont le pliage est possible sans fissuration (dans l'endroit du pliage) du revêtement conducteur ininterrompu.

Selon un troisième de ses aspects, l'invention concerne un procédé de production d'une électrode destinée à un condensateur à double couche électrique, le procédé de production comprenant des étapes suivantes consistant à :
- obtenir un substrat multicouche par voie d'application d'un matériau de carbone nanoporeux et d'une substance de liaison sur le revêtement conducteur ininterrompu du collecteur de courant selon l'invention à l'aide de l'une des techniques suivantes : (a) technique de laminage ; (6) technique de pressage ; (B) technique d'enrobage,
- dessécher le substrat multicouche obtenu,
- découper du substrat multicouche desséché l'électrode de dimension prédéterminée.

Cela permet d'obtenir des électrodes de toute dimension et/ou profil prédéterminée.

De préférence, le procédé de production comprend une étape consistant à déposer une gaine de protection diélectrique sur, au moins, la face verso de surface de la feuille d'aluminium.

Cela permet d'améliorer la tenue de l'électrode à la corrosion.

La gaine de protection diélectrique comprend de préférence un mélange de la substance de liaison et d'un polymère diélectrique chimiquement neutre. Dans ces conditions, la gaine de protection diélectrique est déposée de préférence à l'aide de la technique d'enrobage.

Cela contribue à accélérer la production de l'électrode.

Selon un quatrième de ses aspects, l'invention concerne une électrode fabriquée à l'aide du procédé de production mentionné ci-dessus et destiné à un condensateur à double couche électrique. Dans ces conditions, le matériau de carbone nanoporeux comprend le carbone avec une surface unitaire développée jusqu'à 3*10⁶ m²/kg.

La présence dans le carbone de la surface unitaire si développée contribue à assurer une suffisante (pour l'utilisation ultérieure dans le supercondensateur) capacité électrique de l'électrode.

Selon un cinquième de ses aspects, l'invention concerne un procédé d'assemblage d'un condensateur à double couche électrique comprenant des étapes suivantes consistant à :
- former un empilement comprenant une anode, une cathode et un séparateur poreux isolant disposé entre elles, l'une au moins parmi l'anode et la cathode comprenant l'électrode selon l'invention,
- loger l'empilement dans une boîte comprenant des sorties de contact positive et négative au moins partiellement saillantes à l'extérieur de la boîte,
- connecter l'anode et la cathode avec les sorties de contact positive et négative respectivement,
- imbiber l'empilement d'un électrolyte organique,
- étancher la boîte.

Cela permet d'obtenir un supercondensateur dont la capacité électrique peut atteindre 10⁷ Farad/m³.

De préférence, la boîte présente une paroi interne réalisée en matériau isolant électrique. Dans ces conditions, le procédé d'assemblage comporte une étape consistant à fixer l'électrode à la paroi interne de la boîte.

Cela permet de fixer solidement l'électrode à l'intérieur de la boîte et augmenter ainsi la protection du supercondensateur contre des vibrations ce qui est particulièrement important lors de son utilisation dans les véhicules et, en particulier, dans les appareils volants.

Selon un sixième de ses aspects, l'invention concerne un condensateur à double couche électrique fabriqué à l'aide du procédé d'assemblage décrit ci-dessus. Dans ces conditions, en tant que l'électrolyte organique, est utilisée une solution de tetrafluoroborate de tétrakis(dialkylamino)phosphonium, ou tetraalkylammonium, ou leurs mélanges, dans un solvant aprotique polaire ou dans un mélange des solvants choisis dans la famille de : (a) acétonitrile ; (b) γ- butyrolactone ; (c) carbonate de propylène; (d) carbonate d'éthylène; (e) carbonate d'éthylméthyle ; (f) carbonate de diéthyle ; (g) carbonate de diméthyle ; (h) diméthoxyéthane ; (i) tétrahydrofuranne.

La présence de cet électrolyte organique dans le supercondensateur contribue à augmenter sa tension de service, au moins jusqu'à 2,3 Volt, et aussi le nombre de ses cycles « charge-décharge », au moins jusqu'à 10⁵ cycles à la température ambiante (environ 20°C).

D'autres caractéristiques et avantages de l'invention ressortent clairement de la description qui en est faite ci-après, à titre indicatif et nullement limitatif, en référence aux dessins annexés, dans lesquels :
- la figure 1 représente schématiquement une première variante (une vue simplifiée de côté en coupe) d'un condensateur à double couche électrique dont chacun des électrodes comporte un collecteur de courant selon l'invention,
- la figure 2 représente schématiquement une succession des étapes propres à un procédé d'assemblage de la première variante du condensateur à double couche électrique sur la figure 1,
- la figure 3 représente schématiquement une deuxième variante (une vue simplifiée de côté en coupe) d'un condensateur à double couche électrique dont chacun des électrodes comporte un collecteur de courant selon l'invention,
- la figure 4 représente schématiquement une succession des étapes propres à un procédé d'assemblage de la deuxième variante du condensateur à double couche électrique sur la figure 3,
- la figure 5 représente schématiquement une troisième variante (une vue simplifiée de côté en coupe) d'un condensateur à double couche électrique dont chacun des électrodes comporte un collecteur de courant selon l'invention,
- la figure 6 représente schématiquement une succession des étapes propres à un procédé d'assemblage de la troisième variante du condensateur à double couche électrique sur la figure 5,

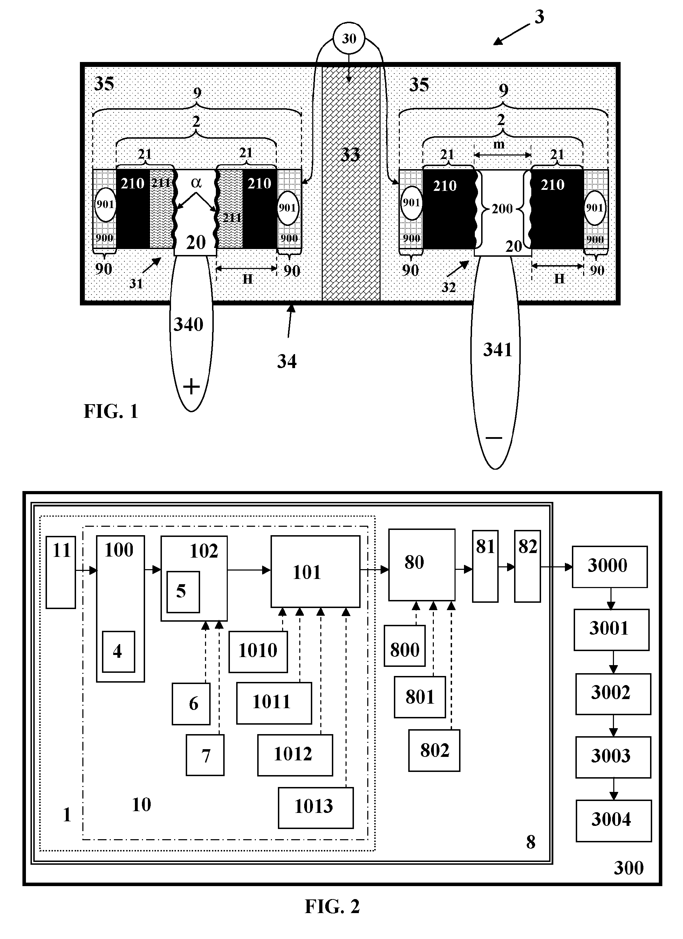

Comme annoncé précédemment et illustré sur les figures 1 à 6, l'invention concerne :
- selon un premier de ses aspects, un procédé de fabrication 1 d'un collecteur de courant 2 en feuille d'aluminium 20,
- selon un deuxième de ses aspects, le collecteur de courant 2 proprement dit obtenu à l'aide du procédé de fabrication 1,
- selon un troisième de ses aspects, un procédé de production 8 d'un électrode 9 comprenant ledit collecteur de courant 2,
- selon un quatrième de ses aspects, l'électrode 9 proprement dit obtenu à l'aide du procédé de production 8,
- selon un cinquième de ses aspects, un procédé d'assemblage 300 d'un condensateur 3 à double couche électrique (habituellement appelé supercondensateur ou ultracondensateur, dont la capacité électrique unitaire peut atteindre 10⁷ Farad/m³) comprenant ledit électrode 9,
- selon un sixième de ses aspects, le condensateur 3 à double couche électrique proprement dit obtenu à l'aide du procédé d'assemblage 300.

Comme représenté sur les figures 2, 4, 6, un procédé de fabrication 1 d'un collecteur de courant 2 (destiné, comme mentionné ci-dessus, à un condensateur 3 à double couche électrique) comprend une phase de traitement 10 d'au moins une partie préalablement sélectionnée 200 de surface de la feuille d'aluminium 20. Cette phase de traitement 10 est adaptée à réduire l'influence d'une pellicule native d'oxyde de la feuille d'aluminium 20 sur la résistance interne du condensateur 3 à double couche électrique.

La phase de traitement 10 comprend une étape consistant à installer 100 la feuille d'aluminium 20 dans une chambre à vide 4. Pour cela une couronne de la feuille d'aluminium 20 est installée dans un dispositif de déroulement du ruban (non représenté) qui assure son rembobinage sans à-coups avec une vitesse linéaire déterminée. Ensuite, le dispositif de déroulement du ruban avec la couronne de la feuille d'aluminium 20 est installé dans la chambre à vide 4, après quoi cette dernière est mise sous vide.

La phase de traitement 10 comporte aussi une étape consistant à déposer 101 par une technique de pulvérisation sous vide sur la partie sélectionnée 200 de surface de la feuille d'aluminium 20 un revêtement conducteur 21.

Selon l'invention, la phase de traitement 10 comprend une étape consistant à éliminer 102 une pellicule native d'oxyde de la partie sélectionnée 200 de surface de la feuille d'aluminium 20. Dans ces conditions, la partie sélectionnée 200 de surface de la feuille d'aluminium 20 est revêtue intégralement par le revêtement conducteur ininterrompu 21. En outre, le revêtement conducteur 21 comprend au moins une couche externe 210 consistant exclusivement en carbone. Un exemple d'un tel collecteur de courant 2 est utilisé dans la structure de l'électrode 9 formant une cathode 32 du supercondensateur 3 (dans la partie droite des figures 1, 3, 5).

De préférence, le revêtement conducteur 21 comprend au moins une couche interne 211 distincte de la couche externe 210. La couche interne 211 est disposée entre la couche externe 210 et la feuille d'aluminium 20. Dans ces conditions la couche interne 211 consiste en mélange de carbone et d'aluminium. Cette architecture améliorée du collecteur de courant 2 est utilisée dans la structure de l'électrode 9 formant une anode 31 du supercondensateur 3 (dans la partie gauche des figures 1, 3, 5).

Comme représenté sur les figures 2, 4 et 6, l'étape d'élimination 102 de la pellicule native d'oxyde est réalisée à l'aide d'un bombardement d'ions et de plasma dans une atmosphère d'un gaz inerte 5 (tel, par exemple, qu'un argon) dont on remplit la chambre à vide 4 après sa mise à vide mentionnée ci-dessus. Pour éliminer 102 la pellicule native d'oxyde on peut utiliser un canon à ions 6 dans lequel s'opère une formation d'un faisceau accéléré d'ions du gaz inerte 5, orienté contre la partie sélectionnée 200 de surface de la feuille d'aluminium 20 pour son traitement couche par couche. Comme une alternative du canon à ions 6, pour éliminer 102 la pellicule native d'oxyde on peut aussi utiliser un générateur 7 de plasma haute fréquence. Il forme le plasma et le localise contre la face traitée de la partie sélectionnée 200 de surface de la feuille d'aluminium 20. Le plasma consiste en ions du gaz inerte 5 chargés positivement et en électrons. Soumis à la tension électrique appliquée, les ions du gaz inerte 5 de travail s'accélèrent et bombardent la partie sélectionnée 200 de surface de la feuille d'aluminium 20 en conséquence de quoi s'opère son dénudage, c'est-à-dire, l'élimination de sa couche native d'oxyde d'aluminium et des pollutions éventuelles. En outre, un tel bombardement augmente une (micro)rugosité primaire (non représentée) de la partie sélectionnée 200 de surface de la feuille d'aluminium 20. Cette (micro)rugosité fait environ 10⁻⁸ m.

L'étape de dépôt 101 du revêtement conducteur ininterrompu 21 est réalisée à l'aide d'une source de pulvérisation d'un matériau comprenant du carbon. Pour cela on utilise l'une au moins des techniques suivantes:
- une technique magnétron 1010, ou
- une technique cathodique 1011, ou
- une technique à arc électrique 1012, ou
- une technique de plasma ionique 1013.

Comme mentionné ci-dessus, le matériau comprenant du carbone, soumis à la pulvérisation, se dépose sur la partie sélectionnée 200 dénudée de surface de la feuille d'aluminium 20 et forme sur elle le revêtement conducteur ininterrompu 21. Pour former la couche interne 211 du revêtement conducteur ininterrompu 21, le matériau pulvérisé par la source de pulvérisation consiste en mélange du carbone et de l'aluminium en poudre. Pour former la couche externe 210 du revêtement conducteur ininterrompu 21, le matériau pulvérisé par la source de pulvérisation se présente comme une poudre de graphite consistant exclusivement en carbone.

Comme représenté sur les figures 2, 4 et 6, avant la phase de traitement 10, le procédé de fabrication 1 comprend une étape consistant à ajouter 11 une (macro)rugosité supplémentaire α à la partie sélectionnée 200 de surface de la feuille d'aluminium 20 à l'aide des techniques mécaniques (déformation) ou chimiques (décapage). Cette (macro)rugosité α fait environ 10⁻⁶ m : α ∼ 10⁻⁶ m.

De préférence, la partie sélectionnée 200 de surface (de la feuille d'aluminium 20) adapté à collecter le courant occupe jusqu'à 99% de toute la superficie de la feuille d'aluminium 20.

Cela assure une qualité élevée du revêtement conducteur 21 et bloque de manière fiable l'accès d'un oxydant au collecteur de courant 2 en empêchant ainsi sa corrosion.

Grâce à ce procédé de fabrication 1, le collecteur de courant 2 peut être fabriqué à partir de la feuille d'aluminium 20 dont une première épaisseur m fait au moins 1,5*10⁻⁵ m.

De préférence, une deuxième épaisseur H du revêtement conducteur ininterrompu 21 du collecteur de courant 2 selon l'invention (figures 1, 3, 5) est comprise dans l'intervalle de 10⁻⁸ m à 5*10⁻⁶ m : 10⁻⁸ m ≤ H ≤ 5*10⁻⁶ m, et, en particulier, dans l'intervalle de 5*10⁻⁸ M à 5*10⁻⁷ m : 5*10⁻⁸ m ≤ H ≤ 5*10⁻⁷ m.

Comme représenté sur les figures 2, 4 et 6, pour produire 8 de l'électrode 9 destiné au condensateur 3 à double couche électrique, on obtient 80 d'abord un substrat multicouche 90. Pour cela on prend le collecteur de courant 2 fabriqué comme décrit ci-dessus et on applique, sur son revêtement conducteur ininterrompu 21, un matériau de carbone nanoporeux 900 et une substance de liaison 901 (par exemple, un polyfluorure de vinylidène (en anglais «polyvinylidene fluoride» ou «PVDF») ou un polytétrafluoroéthylène (en anglais «polytetrafluoroethylene» ou «PTFE»)). Dans ces conditions, on utilise l'une au moins des techniques suivantes :
- technique de laminage 800 (en anglais «rolling method»), ou
- technique de pressage 801 (en anglais «pressing method»), ou
- technique d'enrobage 802 (en anglais «coating method»).

De préférence, le matériau de carbone nanoporeux 900 comprend le carbone avec une surface unitaire développée jusqu'à 3*10⁶ m²/kg.

Le substrat multicouche 90 ainsi obtenu est desséché 81.

Ensuite, on découpe 82 du substrat multicouche 90 desséché l'électrode 9 de dimension prédéterminée qui peut présenter une quelconque forme prédéterminée (par exemple, un rectangle, un losange, un trapèze, un cercle etc.). La production de l'électrode 9 est terminée.

La résistance combinée de contact de l'électrode 9 selon l'invention se compose de :
- la première résistance de contact à l'interface entre le substrat multicouche 90 et le revêtement conducteur 21, et
- la deuxième résistance de contact à l'interface entre le revêtement conducteur 21 et la partie sélectionnée 200 de surface de la feuille d'aluminium 20.

L'exemple décrit ci-dessous illustre une réduction effective de la résistance combinée de contact de l'électrode 9 selon l'invention. Cette électrode 9 dispose du substrat multicouche 90 et du revêtement conducteur 21. Ce dernier est déposé 101 par la technique magnétron 1010 et comprend seulement la couche externe 210 en carbone (c'est-à-dire, la couche interne 211 en carbone et en aluminium est absente). La valeur mesurée de la résistance combinée de contact de cette électrode 9 est comprise dans l'intervalle proche du zéro : de 1,5*10⁻⁷ Ω*m² à 2,0*10⁻⁷ Ω*m². A titre de comparaison, pour toutes autres conditions restant égales, si le substrat multicouche 90 est déposé sur la surface de référence (qui n'est pas traitée selon l'invention) de la feuille d'aluminium 20 comprenant en particulier la pellicule native d'oxyde, la valeur mesurée de la résistance combinée de contact de l'électrode de référence fait environ 3,0*10⁻⁵ Ω*m², c'est-à-dire, plus de 100 fois plus élevée que la valeur proche du zéro de la résistance combinée de contact mesurée de l'électrode 9 selon l'invention.

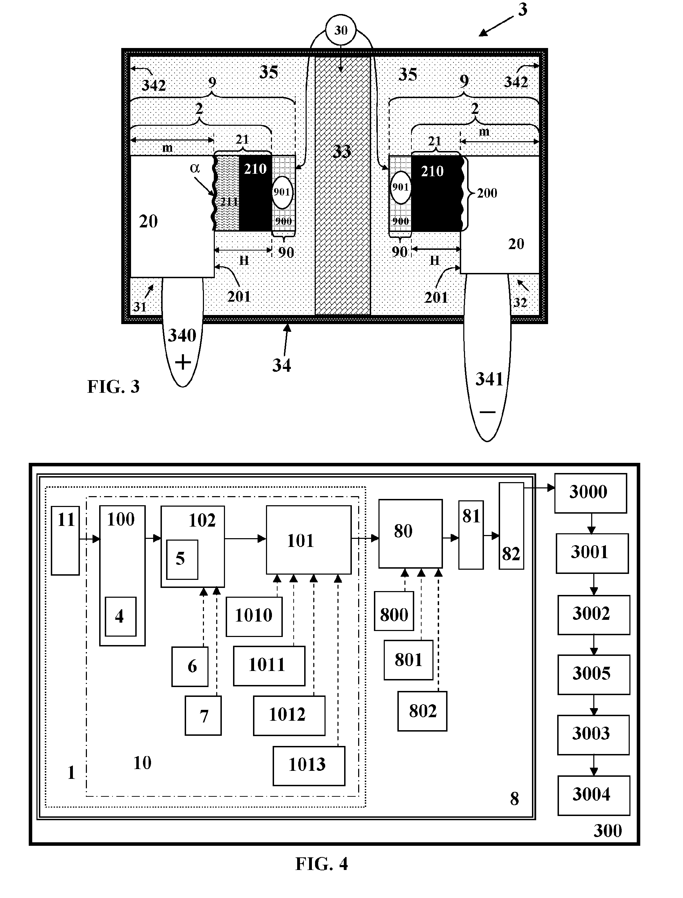

Comme représenté sur les figures 2, 4 et 6, pour assembler 300 le condensateur 3 à double couche électrique, on forme 3000 d'abord un empilement 30 comprenant une anode 31, une cathode 32 et un séparateur poreux isolant 33 disposé entre elles. Dans ces conditions, l'une au moins parmi l'anode 31 et la cathode 32 comprend l'électrode 9 produit selon le procédé de production 8 décrit ci-dessus avec l'utilisation du collecteur de courant 2 selon l'invention. De préférence, et l'anode 31, et la cathode 32 comprennent l'électrode 9 selon l'invention. Dans ces conditions, chacun des électrodes 9 du condensateur 3 à double couche électrique peut avoir sa propre configuration : dans les exemples sur les figures 1 et 3 :
- le revêtement conducteur 21 dans la cathode 32 comprend seulement la couche externe 210,
- le revêtement conducteur 21 dans l'anode 31 comprend et la couche externe 210 et la couche interne 211.

Ensuite, l'empilement 30 est logé 3001 dans une boîte 34 comprenant des sorties de contact positive et négative 340, 341 au moins partiellement saillantes à l'extérieur de la boîte 34 (figures 1, 3).

Puis, l'anode 31 et la cathode 32 sont connectées 3002 avec, au moins, les sorties de contact positive et négative 340, 341 de la boîte 34 respectivement (figures 1, 3). La connexion 3002 peut être réalisée à l'aide d'une soudure. Pour cela on utilise 1% de la surface de la feuille d'aluminium 20 qui ne fait pas partie de sa partie sélectionnée 200, c'est-à-dire, est libre du revêtement conducteur 21 (figure 1).

Après cela l'empilement 30 est imbibé 3003 d'un électrolyte organique 35. En qualité de ce dernier on peut utiliser une solution de :
- tetrafluoroborate de tétrakis(dialkylamino)phosphonium (en anglais «tetrakis(dialkylamino)phosphonium tetrafluoroborate») dont la formule chimique est: [(R₂N)₄P]BF₄, où R=alkyl, ou
- tetraalkylammonium (en anglais «tetraalkylammonium») dont la formule chimique est: R₄N⁺, ou
- leurs mélanges:
   o dans un solvant aprotique polaire (en anglais «polar aprotic solvent»), ou
   o dans un mélange des solvants choisis dans la famille de :
      ■ acétonitrile (en anglais «acetonitrile»),
      ■ γ- butyrolactone (en anglais «γ-butyrolactone»),
      ■ carbonate de propylène (en anglais «propylene carbonate»),
      ■ carbonate d'éthylène (en anglais «ethylene carbonate»),
      ■ carbonate d'éthylméthyle (en anglais «ethylmethyl carbonate»),
      ■ carbonate de diéthyle (en anglais «diethyl carbonate»),
      ■ carbonate de diméthyle (en anglais «dimethyl carbonate»),
      ■ diméthoxyéthane 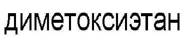 (en anglais «dimethoxyethane»),
      ■ tétrahydrofuranne (en anglais «tetrahydrofurane»).

Enfin, on fait étancher 3004 la boîte 34 : le condensateur 3 à double couche électrique est assemblé (figures 1, 3).

Dans l'exemple sur la figure 1 la partie sélectionnée 200 du collecteur de courant 2 recouvre aussi bien une face recto 201 qu'une face verso (c'est-à-dire, opposée à celle recto 201) de surface de la feuille d'aluminium 20. Le traitement des deux faces de la feuille d'aluminium 20 complique la fabrication du collecteur de courant 2 à cause des manipulations supplémentaires dans la chambre à vide 4 ayant comme objectif à installer d'abord la face recto 201, puis la face verso 202 de la feuille d'aluminium 20 en regard du canon à ions 6 ou du générateur 7 de plasma haute fréquence pour l'élimination efficace de la pellicule native d'oxyde de la partie sélectionnée 200. En outre, plus la surface traitée lors de la phase de traitement 10 de la partie sélectionnée 200 (comme évoqué ci-dessus cette dernière peut atteindre jusqu'à 99% de la superficie globale de la feuille d'aluminium 20, c'est-à-dire de la surface des deux faces de la feuille d'aluminium 20) est importante, plus la phase de traitement 10 est longue, en conséquence de quoi le procédé de fabrication du collecteur de courant 2 est plus lent. Cela augmente le temps de production de l'électrode et, in fine, le temps d'assemblage du supercondensateur 3.

Sur la figure 3 est représenté un deuxième exemple alternatif au premier, dans lequel la partie sélectionnée 200 du collecteur de courant 2 recouvre au moins la face recto 201 de surface de la feuille d'aluminium 20. Dans ces conditions, la face verso de surface de la feuille d'aluminium 20 est libre de la partie sélectionnée 200, c'est-à-dire, n'est pas traitée lors de la phase de traitement 10. Cela permet d'exclure les manipulations supplémentaires dans la chambre à vide 4 décrites ci-dessus et réduire, dans l'ensemble, la superficie de la partie sélectionnée 200 traitée lors de la phase de traitement 10, par exemple, jusqu'à 99% de la face recto 201 de surface de la feuille d'aluminium 20, c'est-à-dire, jusqu'à 49,5% de la superficie globale des deux faces de la feuille d'aluminium 20.

Pour que l'efficacité (au moins en tension de service et en nombre de cycle « charge-décharge ») de la deuxième variante du supercondensateur 3 sur la figure 3 (dans laquelle la partie sélectionnée 200 du collecteur de courant 2 est disposée seulement sur la face recto 201) soit comparable avec la première variante du supercondensateur 3 sur la figure 1 (dans laquelle la partie sélectionnée 200 du collecteur de courant 2 est disposée et la face recto, et la face verso 202) :
- au moins une paroi interne 340 de la boîte 34 est réalisé en matériau isolant électrique, et
- le procédé d'assemblage 300 (figure 4) comprend un étape consistant à fixer 3005 (par exemple, à l'aide d'une colle ou d'une soudure) l'électrode 9 (au moins la face verso de la feuille d'aluminium 20) sur la paroi interne 340 de la boîte 34.

Cela empêche aussi la corrosion du collecteur de courant 2 (à cause de laquelle ce dernier « se dissout » littéralement, c'est-à-dire, se détruit dans l'électrolyte organique 35) du côté de la face verso de surface de la feuille d'aluminium 20 ce qui est particulièrement important pour l'électrode 9 qui est l'anode 340 du supercondensateur 3.

Cependant, la nécessité de fixer 3005 de manière fiable la face verso de la feuille d'aluminium 20 sur la paroi interne 340 de la boîte 34 exige beaucoup de temps, freine le procédé d'assemblage 300 du supercondensateur 3. Cela augmente un risque des erreurs au cours de l'assemblage ce qui peut être la cause d'un contact spontané de l'électrolyte organique 35 avec la face verso de surface de la feuille d'aluminium 20 en cours d'utilisation du supercondensateur 3 et, in fine, d'un raccourcissement d'une durée de vie du supercondensateur 3.

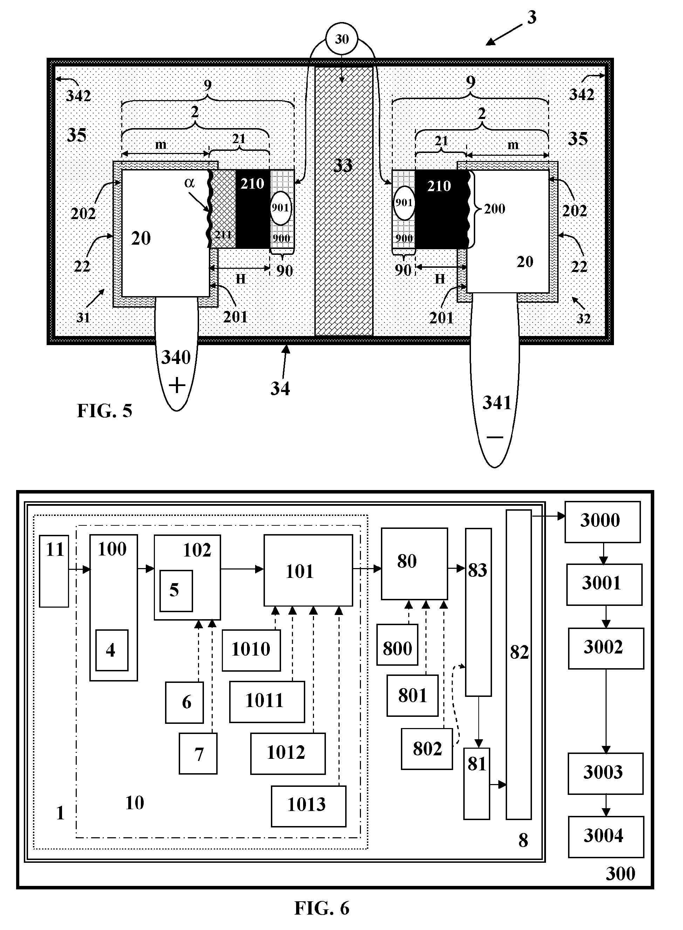

Une troisième variante de configuration du supercondensateur 3 représenté sur la figure 5, a une architecture de compromis qui, d'une part, présente des avantages de la première et de la deuxième variantes du supecondensateur 3 (figures 1 et 3), et, d'autre part, manque des défauts décrits ci-dessus. Pour cela la partie sélectionnée 200 du collecteur de courant 2 recouvre au moins la face recto 201 de surface de la feuille d'aluminium 20. Dans ces conditions, sur au moins la face verso 202 de surface de la feuille d'aluminium 20 (qui est libre de la partie sélectionnée 200) se trouve une enveloppe diélectrique de protection 22. Cette dernière dispose des propriétés d'un isolant électrique, c'est-à-dire, ne conduit pas le courant électrique, et est chimiquement neutre par rapport à l'électrolyte organique 35, c'est-à-dire, ne se dissout pas en lui. Ainsi, l'enveloppe diélectrique de protection 22 protège de manière fiable l'électrode 9 (au moins la face verso 202 de surface de la feuille d'aluminium 20) de la corrosion.

De préférence, l'enveloppe diélectrique de protection 22 recouvre toute la superficie de la feuille d'aluminium 20 à l'exclusion sa partie sélectionnée 200, comme représenté dans l'exemple sur la figure 5. Cette caractéristique permet d'isoler davantage l'électrode 9 de l'électrolyte organique 35 et, par conséquent, de la corrosion, ce qui augmente in fine la durée de vie du supercondensateur 3.

Le procédé de production 8 (figure 6) de l'électrode 9 (pour la troisième variante du supercondensateur 3 sur la figure 5) comprend une étape consistant à appliquer 83 l'enveloppe diélectrique de protection 22 sur au moins la face verso 202 de surface de la feuille d'aluminium 20.

L'enveloppe diélectrique de protection 22 peut comporter un mélange de la substance de liaison 901 avec un polymère-diélectrique chimiquement neutre. L'enveloppe diélectrique de protection 22 peut être appliquée sur, par exemple, toute la superficie de la feuille d'aluminium 20 à l'exclusion de sa partie sélectionnée 200, à l'aide de la technique d'enrobage 802 (figure 6) mentionnée ci-dessus.

Comme la première variante sur la figure 1, la troisième variante du supercondensateur 3 (figure 5) n'impose aucune limitation sur le matériau de la boîte 34 (ou sur le matériau de sa paroi interne 340).

En outre, le procédé d'assemblage 300 de la troisième variante du supercondensateur 3 peut comprendre une étape (non représentée sur la figure 6) consistant à fixer (par exemple, à l'aide d'une colle) l'électrode 9 (au moins son enveloppe diélectrique de protection 22 du côté de la face verso 202 de surface de la feuille d'aluminium 20) sur la paroi interne 340 de la boîte 34 (une telle version de la troisième variante du supercondensateur 3 n'est pas représentée sur la figure 6).

## Revendications

1. Procédé de fabrication (1) d'un collecteur de courant (2) en feuille d'aluminium (20) destiné à un condensateur (3) à double couche électrique, le procédé de fabrication (1) comprenant une phase de traitement (10) d'au moins une partie préalablement sélectionnée (200) de surface de la feuille d'aluminium (20), la phase de traitement (10) comportant des étapes suivantes consistant à :
- installer (100) la feuille d'aluminium (20) dans une chambre à vide (4),
- déposer (101) par une technique de pulvérisation sous vide sur la partie sélectionnée (200) de surface de la feuille d'aluminium (20) un revêtement conducteur (21),
**caractérisé en ce que** la phase de traitement (10) comprend une étape consistant à éliminer (102) une pellicule native d'oxyde de la partie sélectionnée (200) de surface de la feuille d'aluminium (20), **en ce que** la partie sélectionnée (200) de surface de la feuille d'aluminium (20) est revêtue intégralement par le revêtement conducteur ininterrompu (21), et **en ce que** le revêtement conducteur (21) comprend au moins une couche externe (210) consistant exclusivement en carbone.

2. Procédé de fabrication (1) selon la revendication 1, **caractérisé en ce que** le revêtement conducteur (21) comprend au moins une couche interne (211) disposée entre la couche externe (210) et la feuille d'aluminium (20), et **en ce que** la couche interne (211) consiste en mélange de carbone et d'aluminium.

3. Procédé de fabrication (1) selon la revendication 1 ou 2, **caractérisé en ce que** l'étape d'élimination (102) de la pellicule native d'oxyde est réalisée dans une atmosphère d'un gaz inerte (5) à l'aide d'un canon à ions (6) ou d'un générateur (7) de plasma haute fréquence.

4. Procédé de fabrication (1) selon l'une quelconque des revendications 1 à 3, **caractérisé en ce que** l'étape de dépôt (101) du revêtement conducteur ininterrompu (21) est réalisée à l'aide de l'une au moins des techniques suivantes: (a) technique magnétron (1010); (b) technique cathodique (1011); (c) technique à arc électrique (1012); (d) technique de plasma ionique (1013).

5. Procédé de fabrication (1) selon l'une quelconque des revendications 1 à 4, **caractérisé en ce qu'**avant la phase de traitement (10), il comprend une étape consistant à ajouter (11) une rugosité supplémentaire (α) à la partie sélectionnée (200) de surface de la feuille d'aluminium (20) à l'aide des techniques mécaniques ou chimiques.

6. Procédé de fabrication (1) selon l'une quelconque des revendications 1 à 5, **caractérisé en ce que** la feuille d'aluminium (20) présente une face recto (201) et, à l'opposé d'elle, une face verso (202), et **en ce que** la partie sélectionnée (200) de surface occupe jusqu'à 99% de, au moins, la face recto 201 de la feuille d'aluminium (20).

7. Collecteur de courant (2) en feuille d'aluminium (20) réalisé à l'aide du procédé de fabrication (1) selon l'une quelconque des revendications 1 à 6 et destiné à un condensateur (3) à double couche électrique, **caractérisé en ce qu'**une première épaisseur (m) de la feuille d'aluminium (20) fait au moins 1,5*10⁻⁵ m, et **en ce qu'une** deuxième épaisseur (H) du revêtement conducteur ininterrompu (21) est comprise dans l'un des intervalles suivants : (a) de 10⁻⁸ m à 5*10⁻⁶ m; (b) de 5*10⁻⁸ M à 5*10⁻⁷ m.

8. Procédé de production (8) d'une électrode (9) destinée à un condensateur (3) à double couche électrique, le procédé de production (8) comprenant des étapes suivantes consistant à :
- obtenir (80) un substrat multicouche (90) par voie d'application d'un matériau de carbone nanoporeux (900) et d'une substance de liaison (901) sur le revêtement conducteur ininterrompu (21) du collecteur de courant (2) selon la revendication 7 à l'aide de l'une des techniques suivantes : (a) technique de laminage (800); (6) technique de pressage (801); (B) technique d'enrobage (802),
- dessécher (81) le substrat multicouche (90) obtenu,
- découper (82) du substrat multicouche (90) desséché l'électrode (9) de dimension prédéterminée.

9. Procédé de production (8) selon la revendication 8 combinée avec la revendication 6, **caractérisé en ce qu'**il comprend une étape consistant à déposer (83) une gaine de protection diélectrique (22) sur, au moins, la face verso (202) de surface de la feuille d'aluminium (20).

10. Procédé de production (8) selon la revendication 9, **caractérisé en ce que** la gaine de protection diélectrique (22) comprend un mélange de la substance de liaison (901) et d'un polymère diélectrique chimiquement neutre, et **en ce que** la gaine de protection diélectrique (22) est déposée à l'aide de la technique d'enrobage (802).

11. Electrode (9) fabriquée à l'aide du procédé de production (8) selon l'une quelconque des revendications 8 à 10 et destiné à un condensateur (3) à double couche électrique, **caractérisé en ce que** le matériau de carbone nanoporeux (900) comprend le carbone avec une surface unitaire développée jusqu'à 3*10⁶ m²/kg.

12. Procédé d'assemblage (300) d'un condensateur (3) à double couche électrique comprenant des étapes suivantes consistant à :
- former (3000) un empilement (30) comprenant une anode (31), une cathode (32) et un séparateur poreux isolant (33) disposé entre elles, l'une au moins parmi l'anode (31) et la cathode (32) comprenant l'électrode (9) selon la revendication 11,
- loger (3001) l'empilement (30) dans une boîte (34) comprenant des sorties de contact positive et négative (340), (341) au moins partiellement saillantes à l'extérieur de la boîte (34),
- connecter (3002) l'anode (31) et la cathode (32) avec les sorties de contact positive et négative (340), (341) respectivement,
- imbiber (3003) l'empilement (30) d'un électrolyte organique (35),
- étancher (3004) la boîte (34).

13. Procédé d'assemblage (300) selon la revendication 12, **caractérisé en ce que** la boîte (34) présente une paroi interne (340) réalisée en matériau isolant électrique, et **en ce que** le procédé d'assemblage (300) comporte une étape consistant à fixer (3005) l'électrode (9) à la paroi interne (340) de la boîte (34).

14. Condensateur (3) à double couche électrique fabriqué à l'aide du procédé d'assemblage (300) selon la revendication 12 ou 13, **caractérisé en ce qu'**en tant que l'électrolyte organique (35) est utilisée une solution de tetrafluoroborate de tétrakis(dialkylamino)phosphonium, ou tetraalkylammonium, ou leurs mélanges, dans un solvant aprotique polaire ou dans un mélange des solvants choisis dans la famille de : (a) acétonitrile ; (b) γ- butyrolactone ; (c) carbonate de propylène ; (d) carbonate d'éthylène ; (e) carbonate d'éthylméthyle ; (f) carbonate de diéthyle ; (g) carbonate de diméthyle ; (h) diméthoxyéthane ; (i) tétrahydrofuranne.
